# EUROPEAN PATENT SPECIFICATION

(11) **EP 0 357 765 B1**
(45) Date of publication and mention of the grant of the patent: **04.05.1994**
(21) Application number: 89903827.7
(22) Date of filing: 16.02.1989
(51) Int. Cl.: B65D 65/14, C09J 7/02

(54) **A MATERIAL, PREFERABLY IN STRIP FORM, FOR USE AS WRAPPING MATERIAL**
EINWICKEL-MATERIAL, INSBESONDERE BANDFÖRMIG
MATIERE, DE PREFERENCE SOUS FORME DE BANDE, SERVANT A ENVELOPPER

(30) Priority: 16.03.1988 SE 8800946
(43) Date of publication of application: 14.03.1990
(73) Proprietor: ERIKSSON, Hans, S-688 00 Storfors (SE)
(72) Inventor: ERIKSSON, Hans, S-688 00 Storfors (SE)
(74) Representative: Lautmann, Kurt O.
(86) International application number: SE8900066
(87) International publication number: WO8908591

(56) References cited:
- EP-A- 0 246 723
- SE-B- 416 136

## Description

The present invention relates to a material according to the preamble of the claim. Such a material can be used as wrapping material, protective material or insulating material. The material is in sheet or strip form. Strip form is generally preferred since the material can be wound onto a core and this is especially suitable for material of film-like character or for thickness from film and upwards. The material is provided with an adhesive on one surface. This is to allow the material to be secured on a product to the wrapped, or on a wall to be covered or an object to be provided with insulation. Usually, if such a material with adhesive is to be manageable, the side provided with adhesive must also be provided with a protective layer, preferably of paper. The protective layer may also be termed release paper. Before the material can be used, the protective layer must be removed. This is a troublesome operation and the adhesive is often so strongly adhesive that it easily adheres to the user.

SE-B-416 136 discloses a wrapping material which solves this problem by providing plastic foam having an open cell structure at the surface. Adhesive is provided within the open cells, such that a certain pressure on the foam is required to expose the adhesive through the cell openings to any surface to be wrapped.

The object of the present invention is to create a material in which the need for an open cell structure is avoided, the use of release paper is obviated and in which both the material and the adhesive used are of such a type that if the material with adhesive comes into contact with the user, or with a surface to be covered, it can be removed without leaving anything behind on the surface coming into contact with the material and, furthermore, without taking with it any of the material from said contact surface.

According to the present invention these objects are achieved by means of the characterising features of the claim.

According to the present invention it is suitable to use a strip-like material which can be wound onto a core with the adhesive layer facing in, the material and the adhesive layer having the properties mentioned above.

According to the present invention a strip-shaped material is used, said material having such a surface that upon contact with an adhesive, the adhesive shall attach to the material but if the adhesive is removed it shall become entirely detached without leaving any adhesive remnants on the surface of the material and without taking with it any part of the material. If this is to be possible, the material surface must be extremely smooth and in certain cases have a greasy surface. The invention is primarily intended for use on a strip of material consisting of foam plastic, the foam plastic consisting of polythene, and where both thickness and strip width can vary within wide limits.

A strip according to the present invention is manufactured by mixing a polythene in granular form with small quantities of additives in powder form intended to initiate the formation of bubbles. The mixture is fed in a first step to a two-step extruder of screw type and the mixture is heated to about 200°C. The melt obtained is supplied to the second extruder step where the temperature is lowered to 100° - 150°C, and is then extruded through an annular nozzle. A porous hose is obtained, which is then cooled internally and externally with air and slit in the longitudinal direction to provide a strip of foam plastic. Parallelepipedic bodies may of course be produced instead of strip. The strip produced is wound onto a core and the outermost end is passed to an adhesive station where adhesive is applied to one side of the strip. The adhesive is one designated Plattonal 1206, manufactured by Svenska Limfabriken AB, Landskrona, Sweden. The adhesive is a dispersion glue including acrylic rest monomers and a formaldehyde-based preservative and obviously any other glue having the same properties may be used. After being provided with a layer of adhesive the strip is carried along a drying tunnel some 5-10 m in length. The glue on the strip is dried in said tunnel and, after passage through the tunnel, its adhesive properties are such that it can be applied on an object and also be removed from an object without any remnants remaining or being removed. The strip with the dried adhesive is wound onto a core with the coated side of the strip facing in. The finished roll is easy to handle since there are no sticky surfaces. When the wrapping material is to be used, the roll can be placed in a stand and a suitable length of the material can be pulled out and cut off. The object is then wrapped with the strip and the wrapping adheres and seals well around the object, thus eliminating the need for string or tape.

If the material is manufactured in sheet form, the sheets can be stacked on top of each other, and a sheet taken from the stack as needed.

Material according to the present invention, consisting of foam plastic, has many applications and can be used for wrapping bottles, applied on surfaces as insulation, as well as innumerable other applications. The present wrapping is particularly suitable for bottles and is superior to known wrappings such as a tube of corrugated cardboard or foam plastic which is fitted over the bottle.

## Claims

1. A wrapping material in the form of a sheet which is manufactured by polythene being in the form of a foam which sheet on one side is supplied with an adhesive material **characterised** in that the adhesive is a dispersion glue designated Plattonal 1206, manufactured by Svenska Limfabriken AB, Landskrona, Sweden containing arcylic restmonomers and a formaldehydebased preservative.

## Patentansprüche

1. Ein Verpackungsmaterial in Form eines Bogens, der aus Polyäthylen in Form eines Schaumes hergestellt ist und welcher Bogen auf der einen Seite mit einem selbsthaftenden Werkstoff beschichtet ist, dadurch **gekennzeichnet**, dass das Haftmittel aus einer Dispersion mit der Bezeichnung Plattonal 1206 besteht, das von der Fa. Svenska Limfabriken AB in Landskrona, Schweden, hergestellt wird und die Dispersion alkrylische Restmonomere und einen auf Formaldehyd basierten Konservierungszusatz enthält.

## Revendications

1. Un matériau d'emballage sous forme d'une feuille caractérisée en ce qu'elle est realisée de polythène en forme de mousse, ladite feuille d'une face étant fournie avec une matière adhésive, l'adhésif étant une colle à dispersion désignée Plattonal 1206, fabriquée par Svenska Limfabriken AB, Landskrona, Suède, comportant des monomères résiduels acryliques et un conservateur à base de formaldéhyde.
